# EUROPÄISCHE PATENTSCHRIFT

(11) **EP 1 260 678 B1**
(45) Veröffentlichungstag und Bekanntmachung des Hinweises auf die Patenterteilung: **07.07.2004**
(21) Anmeldenummer: 02017183.1
(22) Anmeldetag: 15.09.1997
(51) Int. Cl.: F01D 25/12, F01D 5/08, F01D 5/14

(54) **Segmentanordnung für Plattformen**
Segment arrangement for platforms
Arrangement des segments pour plate-formes

(43) Veröffentlichungstag der Anmeldung: 27.11.2002
(62) Teilanmeldung aus: 97810659.9
(73) Patentinhaber: ALSTOM Technology Ltd, 5400 Baden (CH)
(72) Erfinder: Anderson, Gordon, 5400 Baden (CH); Ferber, Jörgen, 79790 Küssaberg (DE); Hall, Keneth, Gainsville, Ga 30506 (US); Hock, Michael, 80992 München (DE); Tarada, Fathi, Dr., Thetford, Norfolk, IP 24 XF (GB); Weigand, Bernhard, Dr., 70794 Filderstadt-Sielmingen (DE)

(56) Entgegenhaltungen:
- EP-A- 1 225 308
- DE-A- 10 019 546
- US-A- 5 020 970
- US-B2- 6 413 042

## Beschreibung

### Technisches Gebiet

Die Erfindung betrifft eine Segmentanordnung für Plattformen, insbesondere in einer Gasturbine, gemäss dem Oberbegriff des Anspruchs 1.

### Stand der Technik

Um eine maximale Turbinenleistung zu erzielen, ist es vorteilhaft, bei den höchstmöglichen Gastemperaturen zu arbeiten. In modernen Gasturbinen sind dabei die Temperaturen so hoch, daß viele Bauteile gekühlt werden müssen, da sonst die für maximale Haltbarkeit zulässige Temperatur der Bauteile überschritten würde. Eine geeignete Auslegung und/oder Kühlung kritischer Bauteile ist daher in modernen Gasturbinen von entscheidender Bedeutung. Das Kühlungsproblem von Plattformen tritt in Ringbrennkammern verstärkt auf, da diese ein sehr gleichmäßiges Temperaturprofil am Eingang zur Turbine erzeugen. Dies bedingt, daß die Plattform der Schaufel fast die mittlere Heißgastemperatur zu ertragen hat. Zur Erzielung möglichst geringer NO_{X}-Emissionen wird in modernen Brennkammern nahezu der gesamte Anteil der Verbrennungsluft durch die Brenner selbst geleitet, der Anteil der Kühlluft für die Filmkühlung der Brennkammer also reduziert. Dies führt ebenfalls zu einem gleichmäßigeren Temperaturprofil am Turbineneingang und somit zu einer erhöhten thermischen Belastung.

Kritische Bauteile in Turbinen stellen unter anderen Hitzeschilde, Brennkammersegmente und Brennkammerplatten, Lauf- und Leitschaufeln, Innen- und Außendeckbänder der Lauf- und Leitschaufeln, sowie Lauf- und Leitschaufelplattformen dar.

Insbesondere an den Seiten von nebeneinander angeordneten Segmenten (Plattformen) kommt es erfahrungsgemäß oft zu einer erhöhten thermischen Belastung. Sind etwa die Segmente einer Plattform mit einer Wärmedämmschicht beschichtet, stellt man oft ein Abplatzen der Beschichtung fest. Dadurch entsteht eine Schwachstelle, an der sich rasch Oxide bilden, die ihrerseits das Abblättern der Beschichtung fördern. So können bald große unbeschichtete Metallflächen dem Heißgasstrom ausgesetzt sein.

Die Schrift US-A-5,374,161 zeigt ein Wärmestausegment einer Gasturbine, mit internen Kühlkanälen ausgestattet ist. Zwischen zwei benachbarten Segmenten wird die Kühlluft in den Heissgasstrom der Gasturbine eingeblasen.

### Darstellung der Erfindung

Der Erfindung liegt die Aufgabe zugrunde, die in Hinblick auf hohe Temperaturen kritischen Bauteile, insbesondere aus Segmenten zusammengesetzte Bauteile, so auszulegen, daß die thermische Belastung dieser Bauteile mit möglichst einfachen Mitteln effektiv reduziert wird.

Diese Aufgabe wird erfindungsgemäß bei einen Gegenstand gemäss dem Oberbegriff des Anspruchs 1, dadurch gelöst, daß stromabwärts des ersten Teilbereichs, in dem der Heißgasstrom vom ersten zum zweiten Segment strömt, sich ein zweiter Teilbereich befindet, in dem der Heißgasstrom vom zweiten Segment über den Spalt zur Oberfläche des ersten Segments strömt. In diesem zweiten Teilbereich wird dann erfindungsgemäss die dem Spalt zugewandte Kante des ersten Segments abgerundet oder abgeschrägt, da in diesem Teilbereich diese Kante von dem Heißgasstrom beaufschlagt wird.

In einem Übergangsbereich zwischen dem ersten und zweiten Teilbereich wird der Heißgasstrom im wesentlichen parallel zu der Richtung des Spalts strömen. Es ist nun vorteilhaft, wenn in diesem Übergangsbereich die Abschrägungen oder Abrundungen des ersten bzw. zweiten Teilbereichs allmählich reduziert und auf Null zurückgeführt werden.

Bei den hier beschrieben Segmentanordnungen handelt es sich in der Regel um eine Vielzahl von Segmenten, die nebeneinander angeordnet sind, so daß jeweils zwei Segmente durch einen Spalt voneinander getrennt sind. Die Segmentanordnung als ganzes kann beispielsweise einen geschlossen Ring bilden oder sie kann innen oder außen auf dem Umfang eines Zylinders angeordnet sein. Die Segmente sind in der Regel bis auf eventuelle Endstücke identisch, so daß es in der vorliegenden Erfindung stets genügt, ein einzelnes Segment zu beschreiben. Wird in der vorliegenden Erfindung von einem ersten und einem zweiten Segment gesprochen, so bezieht sich dies auf zwei beispielhaft herausgegriffene Segmente, die auf den beiden Seiten eines Spalts liegen. Dies dient zur Illustration der Richtung der Gasströmung und bedeutet keine Einschränkung der Erfindung auf nur zwei Segmente. Der Spalt zwischen zwei Segmenten kann durch Fertigungstoleranzen in seiner Breite statistisch variieren, und kann im Extremfall bei einzelnen Segmenten dadurch auch entfallen.

Im Rahmen des ersten Aspektes der vorliegenden Erfindung werden die Kanten unter einem Winkel α zwischen 1 und 60 Grad, bevorzugt zwischen 20 und 40 Grad, besonders bevorzugt unter etwa 30 Grad abgeschrägt. Erstreckt sich die Abschrägung über eine Länge L senkrecht zum Spalt, so hängt die Tiefe T der Abschrägung mit der Länge L und dem Winkel α über tan α = T/L zusammen. Im allgemeinen ist die maximale Tiefe vorgegeben, etwa durch eine Aussparung im Inneren der Segmente, in der sich beispielsweise ein Dichtstreifen befindet. Es wurde gefunden, daß bei dieser Wahl des Winkels, einer Tiefe kleiner als die maximale Tiefe und einer entsprechenden Länge der Abschrägung, die Gefahr des Abreißens der Grenzschicht am Spalt deutlich reduziert wird.

Weiter vorteilhaft für die Stabilität der Grenzschicht ist es, wenn die Übergangsstellen zwischen dem abgeschrägten Bereich und der Innenseite des Spalts, bzw. dem abgeschrägten Bereich und der unveränderten Oberfläche des Segments nicht abrupt ausgebildet, sondern abgerundet, etwa in Form eines Ellipsenteilstücks ausgeführt ist.

Alternativ zur Abschrägung kann auch die gesamte Zurücksetzung der Kante durch eine Abrundung erfolgen, vorteilhaft in Form eines Ellipsenteilstücks. Die Projektion der Abrundung auf die Vorderseite des Segments zeigt dann ein Ellipsenviertel, wobei die Ellipse Halbachsen der Länge L bzw. T aufweist. Es wurde auch hier gefunden, daß die Gefahr des Abreißens der Grenzschicht am Spalt deutlich reduziert ist, wenn L und T so gewählt werden, daß der Winkel α = arctan (T/L) zwischen 1 und 60 Grad, bevorzugt zwischen 20 und 40 Grad, besonders bevorzugt bei etwa 30 Grad liegt. Die Tiefe T wird auch hier durch die maximale Tiefe begrenzt.

Auch bei der Wahl der Tiefe T sind Fertigungstoleranzen bei der Herstellung der Segmente zu berücksichtigen. Vorteilhaft wird die vorgegebene Tiefe T so gewählt, daß bei Berücksichtigung der Toleranzen zumindest ein großer Prozentsatz, beispielsweise mehr als 50% aller Segmente eine Zurücksetzung durch die Abschrägung oder Abrundung aufweisen.

Entsprechend den obigen Ausführungen wird, falls der Heißgasstrom auf dem Segment seine Richtung ändert, für die Tiefe T im ersten bzw. zweiten Teilbereich jeweils ein gewisser Wert, z.B. T1 im ersten, T2 im zweiten Teilbereich gewählt. Beide Werte werden kleiner als die maximale Tiefe gewählt. Im Übergangsbereich werden nun T1 und T2 allmählich auf Null reduziert. Dies kann linear erfolgen, oder vorteilhaft in einer Kreis- oder Ellipsenbogen.

In einer weiteren Ausführungsform wird in dem einem Teilbereich des Spalts, in dem der Heißgasstrom eine Geschwindigkeitskomponente von einem ersten zu einem zweiten Segment aufweist, entlang der dem Spalt zugewandten Kante des ersten Segments zumindest eine Kantenkühlbohrung angebracht. Diese Kantenkühlbohrungen bilden mit der Oberfläche einen Winkel β, und enden nicht an der dem Heißgasstrom ausgesetzten Oberfläche, sondern münden in den die Segmente trennenden Spalt. Die von dem Heißgasstrom beaufschlagte Kante des zweiten Segments ist, wie im ersten Aspekt der Erfindung beschrieben, unter einem Winkel α abgeschrägt oder abgerundet. Dabei wird der Winkel β in einem Bereich um 30 Grad um den Winkel α gewählt. Durch die Verbindung von stromaufwärts liegender Kantenkühlbohrung und stromabwärts liegender Zurücksetzung der gegenüberliegenden Kante bleibt der austretende Kühlluftfilm nicht auf das Volumen des Spalts beschränkt. Er bildet vielmehr zunächst eine schützende Kühlluftschicht über der Abschrägung oder Abrundung und tritt dann auf die vom Heißgasstrom umströmte Oberfläche aus. Aufgrund der gewählten Orientierung der Kantenkühlbohrung und Abschrägung tritt der Kühlluftstrom im wesentlichen parallel zur Heißgasstromrichtung aus, wodurch ein optimaler Kühlluftfilm erzeugt wird. Auch diese Ausführungsform bietet den Vorteil, daß die Kantenkühlbohrungen offen bleiben, auch wenn die Spaltbreite durch Fertigungstoleranzen und/oder transiente Bedingungen im Betrieb auf Null reduziert sein sollte.

Alle beschrieben Aspekte und Ausführungsformen können im Rahmen der Erfindung miteinander kombiniert werden um die thermische Belastung kritischer Bauteile möglichst weit zu reduzieren. Wenn die Erfindung auch vorstehend für eine Segmentanordnung, insbesondere für eine Gasturbine beschrieben wurde, so kann die Erfindung doch mit Vorteil bei allen aus Segmenten zusammengesetzten, einem Heißgasstrom ausgesetzten kritische Bauteilen angewandt werden, wie z.B. Hitzeschilde, Brennkammersegmente und Brennkammerplatten, Lauf- und Leitschaufeln, Innen- und Außendeckbänder der Lauf- und Leitschaufeln, sowie Lauf- und Leitschaufelplattformen. Der Einsatz ist nicht auf Gasturbine beschränkt, auch andere Heißgassysteme, etwa Flugzeugturbinen sind im Rahmen der Erfindung.

### Kurze Beschreibung der Zeichnungen

Die Erfindung soll nachfolgend anhand eines Ausführungsbeispiels im Zusammenhang mit den Zeichnungen näher erläutert werden. Es zeigen:
- Fig. 1: ein schematische perspektivische Ansicht der Leitschaufelplattformen einer Gasturbine;
- Fig. 2: eine Seitenansicht der Leitschaufelplattform aus Richtung 2 von Fig. 1;
- Fig. 3: eine Untersicht der unteren Plattform aus der Richtung 3-3 von Fig. 2 mit eingezeichneten Partikeltrajektorien des Heißgasstroms;
- Fig. 4: einen Schnitt der Anschlußstelle zweier Plattformsegmente in Richtung 4-4 von Fig. 2 (Stand der Technik);
- Fig. 5: einen Schnitt wie Fig. 4; (Stand der Technik)
- Fig. 6a: eine Detailansicht von Fig. 5 im Bereich der Abschrägung/Abrundung des stromabwärtigen Segments;
- Fig. 6b: eine Detailansicht einer Abwandlung von Fig. 5 im Bereich der Abschrägung/Abrundung des stromabwärtigen Segments;
- Fig. 6c: eine Detailansicht einer weiteren Abwandlung von Fig. 5 im Bereich der Abschrägung/Abrundung des stromabwärtigen Segments;
- Fig. 7: eine Untersicht wie Fig. 3, entsprechend dem ersten Ausführungsbeispiel der Erfindung;
- Fig. 8: eine perspektivische Ansicht zweier Segmente einer Leitschaufel einer Hochdruckturbine entsprechend dem ersten Ausführungsbeispiel der Erfindung;
- Fig. 9: einen Schnitt wie Fig. 4, entsprechend einem weiteren Ausführungsbeispiel der Erfindung;
- Fig. 10: einen Schnitt wie Fig. 4, entsprechend einem weiteren Ausführungsbeispiel der Erfindung;
- Fig. 11: einen Schnitt wie Fig. 4, entsprechend einem weiteren Ausführungsbeispiel der Erfindung;
Es sind nur die für das Verständnis der Erfindung wesentlichen Elemente gezeigt. Nicht gezeigt sind beispielsweise der vollständige Leitschaufelring, die Brennkammer und das Abgasgehäuse der Gasturbine mit Abgasrohr und Kamin.

### Wege zur Ausführung der Erfindung

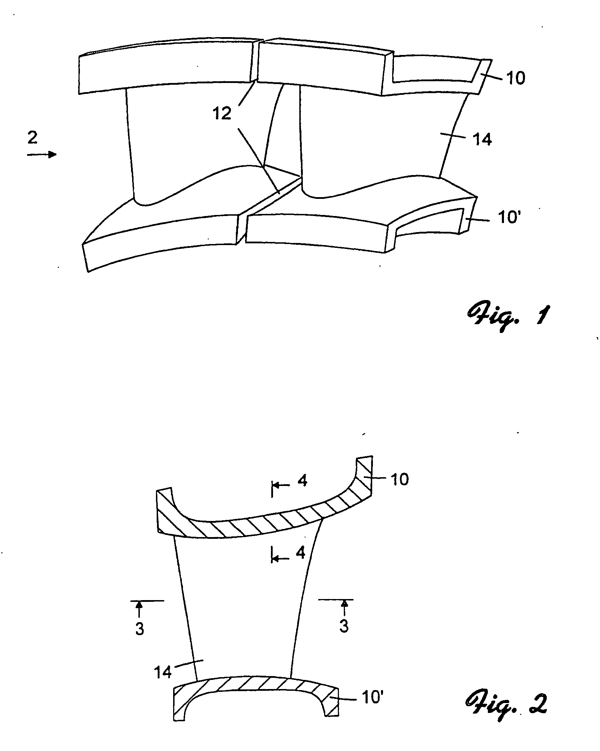

Figuren 1 bis 4 zeigen verschiedene Ansichten einer Leitschaufel einer Gasturbine mit einer Ringbrennkammer nach dem Stand der Technik. Die Leitschaufel umfaßt eine Mehrzahl von oberen und unteren Plattformen 10 und 10' und jeweils ein dazwischen angeordnetes Tragflächenstück 14. Jeweils zwei der oberen und unteren Plattformen (allgemein: Segmente) werden durch einen Spalt 12 voneinander getrennt.

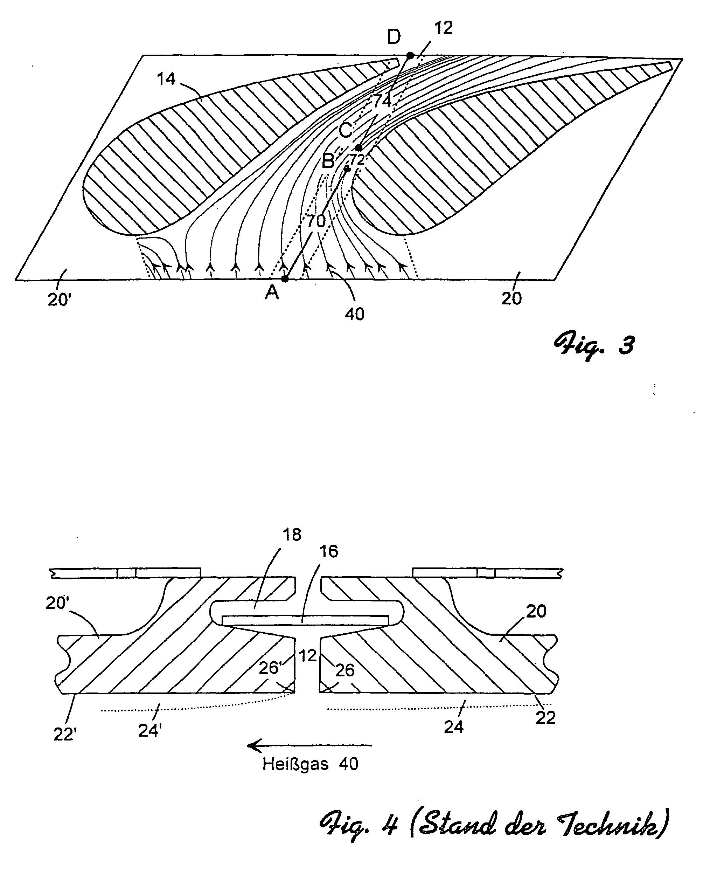

Figur 3 zeigt in Untersicht zwei nebeneinander liegende obere Plattformen 10. Alle Darlegungen gelten für obere und untere Plattformen gleichermaßen, die Plattformen werden daher allgemein als Segmente 20, 20' bezeichnet. In Fig. 3 sind die Partikelbahnlinien des Heißgasstroms 40 auf der Oberfläche der Segmente eingezeichnet. Diese Bahnlinien ergeben sich durch Computersimulationen oder durch direkte Vermessung ausgedienter Komponenten. Der Heißgasstrom 40 hat im wesentlichen eine Geschwindigkeitskomponente entlang des Spalts 12. Zusätzlich gibt es eine Querkomponente (auch: senkrechte Geschwindigkeitskomponente), die dazu führt, daß der Heißgasstrom von einem Segment über den Spalt zum benachbarten Segment führt. In Fig. 3 kehrt die Querkomponente durch die Wirkung des Tragflächenstücks 14 ihr Vorzeichnen um. In einem Teilbereich 70 des Spalts, zwischen den Punkten A und B, fließt der Heißgasstrom vom ersten Segment 20 zum zweiten Segment 20' hin. In einem zweiten Teilbereich 74 des Spalts, zwischen den Punkten C und D gilt das Umgekehrte, d. h. der Heißgasstrom fließt vom zweiten Segment 20' zum ersten Segment 20. In einem Übergangsbereich 72 ist die Richtung des Heißgasstrom im wesentlichen parallel zur Richtung des Spalts 12.

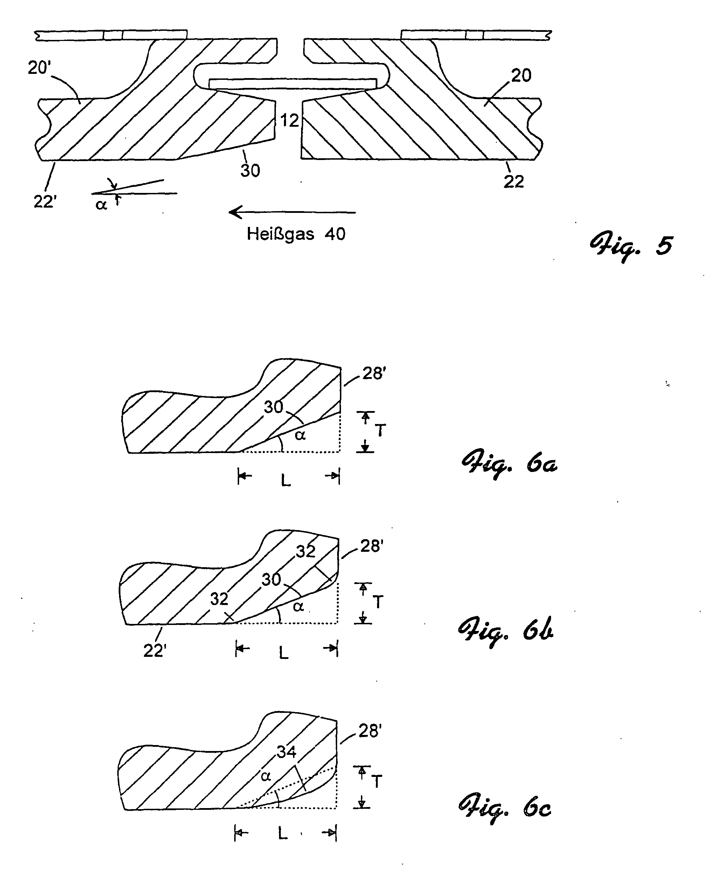

Figur 4 zeigt einen Schnitt der Anschlußstelle zwischen zwei Segmenten im Detail. Die im Inneren der Segmente 20 und 20' angeordnete Aussparung 18 enthält einen Dichtstreifen 16. Der Heißgasstrom 40 strömt an den Oberflächen 22 und 22' der Segmente 20 und 20' entlang. Die Hauptkomponente des Heißgasstroms geht dabei in Fig. 4 in die Papierebene. Zusätzlich gibt es im allgemeinen eine Querrichtung, die in Fig. 4 mit einem Pfeil gekennzeichnet ist. Mit der angegeben Orientierung zeigt Fig. 4 einen Schnitt im ersten Teilbereich 70 (zwischen den Punkten A und B in Fig. 3). Zeigt die Querkomponente etwa wie in Fig. 4 vom ersten Segment 20 zum zweiten Segment 20' so reißt erfahrungsgemäß die Grenzschicht 24 am Spalt 12 ab. Sie bildet sich zwar am zweiten Segment 20' neu (Bezugszeichen 24'), ist aber direkt an der Kante 26' sehr dünn. Dadurch kommt es zu einer erhöhten Wärmebelastung des Segmentmaterials im Bereich der Kante 26'.

Ein erstes Ausführungsbeispiel entsprechend dem Oberbegriff des Anspruchs 1 zeigt Fig. 5. Bei einer Querkomponente vom ersten Segment 20 zum zweiten Segment 20' ist im ersten Ausführungsbeispiel die vom Heißgasstrom beaufschlagte Kante durch Abschrägen unter einem Winkel von etwa 30 Grad zurückgesetzt (Bezugszeichen 30). Es wurde gefunden, daß dadurch die Grenzschicht 24 des stromaufwärts gelegenen ersten Segments 20 am Spalt 12 nicht abreißt. Die Tiefe der Abschrägung T wird so gewählt, daß die Abschrägung sich nicht bis zur den Dichtstreifen 16 enthaltenen Aussparung 18 erstreckt. Die Abschrägung 30 wie eben beschrieben ist in Fig. 6a dargestellt, alternative Abwandlungen sind in Fig. 6b und 6c im Detail gezeigt.

In Fig. 6b ist der Übergang zwischen der abgeschrägten Oberfläche 30 und der Innenseite des Spalts 28' nicht abrupt, sondern abgerundet, etwa in Form eines Ellipsenteilstücks 32 ausgeführt. Dasselbe gilt für den Übergang zwischen der abgeschrägten Oberfläche 30 und der unveränderten Oberfläche des Segments 22'. Die Gefahr des Abreißens der Grenzschicht wird durch diese Ausgestaltung weiter verringert. Figur 6c zeigt, daß auch die gesamte Zurücksetzung als Abrundung 34 ausgeführt werden kann. vorteilhaft geschieht dies in Form eines Ellipsenviertels wie in Fig. 6c. Die Ellipse weist Halbachsen der Länge L bzw. T auf. Ein mit der Abschrägung von Fig. 6a vergleichbarer Winkel ergibt sich bei dem Ellipsenstück durch das Verhältnis der beiden Halbachsen. In Fig. 6c ist dieser Winkel, α = arctan (T/L), gleich groß wie in Fig. 6a gewählt, hier also 30 Grad. Die Gefahr des Abreißens der Grenzschicht am Spalt ist auch bei dieser Alternative sehr gering.

Nach Fig. 3 kehrt die Querkomponente der Geschwindigkeit des Heißgasstroms im vorliegenden Ausführungsbeispiel durch die Wirkung des Tragflächenstücks 14 ihr Vorzeichen um. Im ersten Teilbereich 70 des Spalts, in dem der Heißgasstrom vom ersten Segment 20 zum zweiten Segment 20' hin fließt, ist die beaufschlagte

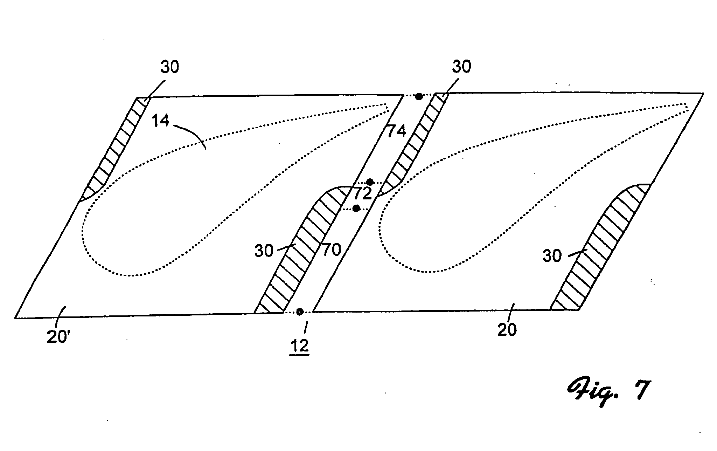

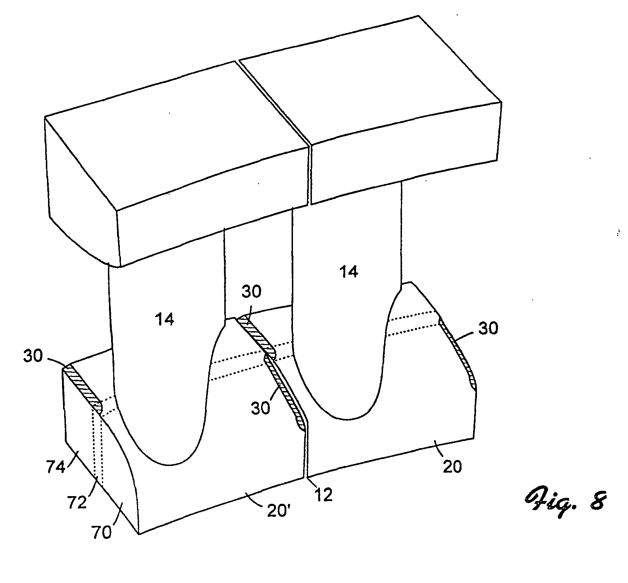

Kante des zweiten Segments 20' abgeschrägt. Figuren 7 und 8 zeigen, daß in dem zweiten Teilbereich 74 des Spalts, in dem der Heißgasstrom vom zweiten Segment 20' zum ersten Segment 20 hin fließt, die beaufschlagte Kante des ersten Segments 20 abgeschrägt ist. In einem Übergangsbereich 72 in dem die Richtung des Heißgasstrom im wesentlichen parallel zur Richtung des Spalts 12 ist, wird die Tiefe der Abschrägung an beiden Segmenten allmählich auf Null reduziert.

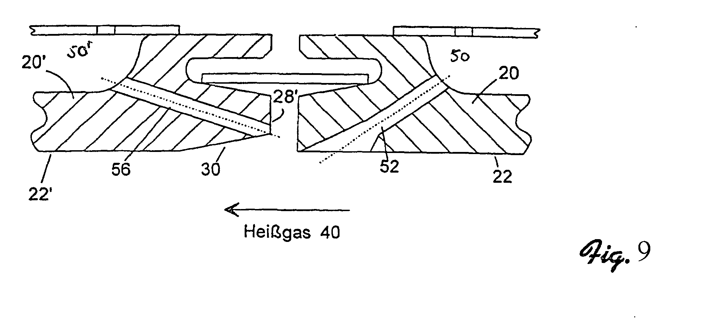

In einem weiteren Ausführungsbeispiel (Fig. 9) werden Filmkühlbohrungen 52 Zusammen mit Kantenkühlbohrungen 56 an den segmenten 20, 20' angebracht Die Bohrungen 52, 56 sind jeweils mit einer Kühlluftkammer 50, 50' verbunden. Zusätzlich ist die vom Heißgas beaufschlagte Kante jedes Segments wie im erfindungegemässen Ausführungsbeispiel abgeschrägt. Die Abschrägung 30 und die Kantenkühlbohrungen 56 sind dabei so aufeinander abgestimmt, daß die Tiefe der Abschrägung 30 bis zu der Öffnung der Kantenkühlbohrung 56 auf der Innenseite 28' des Spalts 12 reicht. Dadurch wird der spaltseitige Endbereich der Kantenkühlbohrungen 56 von der Abschrägung 30 erfaßt, und die Kantenkühlbohrungen 56 bleibt offen, auch wenn die Spaltbreite durch Fertigungstoleranzen oder transiente Bedingungen im Betrieb auf Null reduziert sein sollte. Die Ausgestaltung der Segmente in den einzelnen Teilbereichen ist wie beim erfindungsgemässen Ausführungsbeispiel beschrieben.

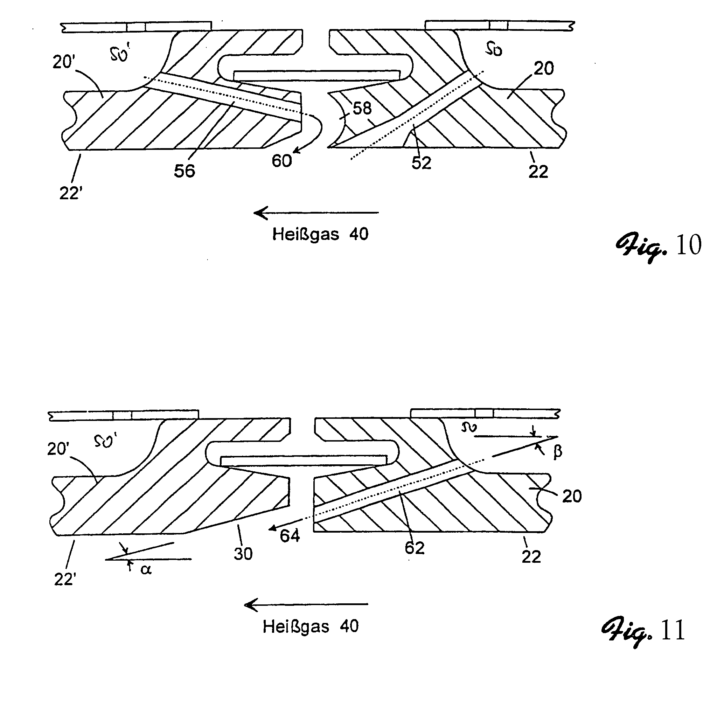

In einem weiteren Ausführungsbeispiel (Fig. 10) werden ebenfalls Filmkühlbohrungen 52 und Kantenkühlbohrungen 56 angebracht, und die vom Heißgas beaufschlagte Kante jedes Segments wie im erfindungsgemässen Ausführungsbeispiel abgeschrägt. Im Gegensatz zum Ausführungsbeispiel der Fig. 9 erreicht hier die Tiefe der Abschrägung 30 die Kantenkühlbohrungen 56 nicht. Zusätzlich wird die dem Spalt 12 zugewandte Innenseite 26 mit einer etwa parabolischen Aussparung 58 versehen, so daß der aus der Kantenkühlbohrung austretende Kühlluftstrom 60 an der Aussparung 58 umgelenkt wird. Während der Kühlluftstrom 60 im Inneren der Kantenkühlbohrung 56 im wesentlichen entgegen der Richtung des Heißgasstroms 40 fließt, verläßt der Kühlluftstrom 60 durch die Umlenkung den Spalt 12 an der Oberfläche 22' im wesentlichen parallel zum Heißgasstrom 40. Dadurch werden unerwünschte Verwirbelungen möglichst vermieden und ein schützender Kühlluftfilm 60 auch von den Kantenkühlbohrungen 56 geliefert. Im zweiten Teilbereich werden analog zu den bisherigen Ausführungsbeispielen Filmkühlbohrungen 52 und Kantenkühlbohrungen 56 sowie Abschrägung 30 und Aussparung 58 vertauscht. Im Übergangsbereich sind wie im zweiten Ausführungsbeispiel auf beiden Seiten des Spalts Kantenkühlbohrungen 56 angeordnet, die Tiefe der Abschrägungen 30 wird allmählich auf Null reduziert, und es sind keine Aussparungen 58 an den Innenseiten 28,28' des Spalts angebracht.

In einem weiteren Ausführungsbeispiel (Fig. 11) sind in dem Teilbereich 70 des Spalts, in dem der Heißgasstrom eine Geschwindigkeitskomponente vom ersten Segment 20 zum zweiten Segment 20' aufweist, entlang der dem Spalt 12 zugewandten Kante 26 des ersten Segments eine Mehrzahl von Kantenkühlbohrungen 62 angebracht. Diese Kantenkühlbohrungen 62 bilden mit der Oberfläche 22 einen Winkel β, hier etwa 40 Grad. Die Kantenkühlbohrungen 62 enden nicht an der dem Heißgasstrom 40 ausgesetzten Oberfläche 22, sondern münden in den Spalt 12. Die vom Heißgasstrom 40 beaufschlagte Kante 26' des zweiten Segments 20' ist wie beim ersten Ausführungsbeispiel unter einem Winkel α, hier etwa 30 Grad, abgeschrägt. Durch die Kombination der stromaufwärts liegenden Kantenkühlbohrung 62 mit der stromabwärts liegenden Abschrägung 30 bleibt der aus der Kantenkühlbohrung 62 austretende Kühlluftstrom 64 nicht auf das Volumen des Spalts 12 beschränkt, er bildet vielmehr eine schützende Kühlluftschicht über der Abschrägung 30 und tritt dann auf die vom Heißgasstrom 40 umströmte Oberfläche 22' aus. Aufgrund der gewählten Orientierung der Kantenkühlbohrung 62 und Abschrägung 30 tritt der Kühlluftstrom 64 im wesentlichen parallel zur Heißgasstromrichtung aus, was unerwünschte Verwirbelungen und aerodynamische Verluste vermeidet und zu einer optimierten Wirkung der Kühlluft führt.

### Bezugszeichenliste

- 10: obere Plattform
- 10': untere Plattform
- 12: Spalt
- 14: Tragflächenstück
- 16: Dichtstreifen
- 18: Aussparung im Segmentinneren
- 20: erstes Segment
- 20': zweites Segment
- 22, 22': dem Heißgasstrom ausgesetzte Oberflächen der Segmente
- 24, 24': Grenzschicht
- 26, 26': dem Spalt zugewandte Kante der Segmente
- 28, 28': Innenseite des Segmente
- 30: abgeschrägte Oberfläche
- 32: gradueller Übergang der Abschrägung
- 34: abgerundete Oberfläche
- 40: Heißgasstrom
- 50, 50': Kühlluftkammer
- 52: Filmkühlbohrung
- 54: trichterförmige Öffnung der Filmkühlbohrung
- 56: Kantenkühlbohrung
- 58: konkave Aussparung
- 60: Kühlluftstrom
- 62: Kantenkühlbohrung (alternative Anordnung)
- 64: Kühlluftstrom
- 70: erster Teilbereich des Spalts
- 72: Übergangsbereich
- 74: zweiter Teilbereich des Spalts

## Patentansprüche

1. Segmentanordnung für Plattformen, an deren Oberfläche ein Heißgasstrom (40) entlangströmt, mit nebeneinander angeordneten, jeweils durch einen Spalt (12) voneinander getrennten Segmenten (20, 20'), wobei in mindestens einem Teilbereich (70) des Spalts (12) der Heißgasstrom (40) eine Geschwindigkeitskomponente senkrecht zur Richtung des Spaltes, von einem ersten Segment (20) zu einem zweiten Segment (20') aufweist, wobei in besagtem Teilbereich (70) die dem Spalt (12) zugewandte Kante (26') der Oberfläche (22') des zweiten Segments (22') abgeschrägt (30) oder abgerundet (34) ist,
**dadurch gekennzeichnet, daß**
in einem zweiten Teilbereich (74) des Spalts (12) der Heißgasstrom (40) eine Geschwindigkeitskomponente senkrecht zur Richtung des Spaltes, von dem zweiten Segment (20') zu dem ersten Segment (20) aufweist, und in besagtem Teilbereich (74) die dem Spalt (12) zugewandte Kante (26) der Oberfläche (22) des ersten Segments (20) abgeschrägt (30) oder abgerundet (34) ist.

2. Segmentanordnung nach Anspruch 1,
**dadurch gekennzeichnet, daß**
zwischen dem ersten und zweiten Teilbereich (70, 74) ein Übergangsbereich (72) angeordnet ist, in dem der Heißgasstrom (40) im wesentlichen entlang der Richtung des Spalts (12) strömt, und daß in besagtem Übergangsbereich (72) die Abschrägung (30) oder Abrundung (34) des ersten und zweiten Teilbereiches (70, 74) allmählich auf Null zurückgeführt ist.

3. Segmentanordnung nach Anspruch 1 oder 2,
**dadurch gekennzeichnet, daß**
die besagten Kanten (26, 26') der Segmente (20, 20') unter einem Winkel α relativ zur Segmentoberfläche (22') abgeschrägt sind, und α zwischen 1° und 60° liegt.

4. Segmentanordnung nach Anspruch 3,
**dadurch gekennzeichnet, daß**
die besagten Kanten (26, 26') der Segmente (20, 20') unter einem Winkel α relativ zur Segmentoberfläche (22') abgeschrägt sind, und α zwischen zwischen 20° und 40° liegt.

5. Segmentanordnung nach Anspruch 3,
**dadurch gekennzeichnet, daß**
der Übergang zwischen den abgeschrägten Flächen (30) und der Innenseite (28) jedes Segments (20), und/oder der Übergang zwischen den abgeschrägten Flächen (30) und den nicht abschrägten Oberflächen (22) jedes Segments (20) in Form eines Ellipsenteilstücks (32) abgerundet ist.

6. Segmentanordnung nach Anspruch 1 oder 2,
**dadurch gekennzeichnet, daß**
die besagten Kanten (26, 26') der Segmente (20, 20') in Form eines Ellipsenviertels (34) abgerundet sind, und die Ellipse Halbachsen der Länge L bzw. T aufweist, wobei der Winkel α = arctan T/L zwischen 1° ° und 60° liegt.

7. Segmentanordnung nach Anspruch 6,
**dadurch gekennzeichnet, daß**
die besagten Kanten (26, 26') der Segmente (20, 20') in Form eines Ellipsenviertels (34) abgerundet sind, und die Ellipse Halbachsen der Länge L bzw. T aufweist, wobei der Winkel α = arctan T/L zwischen 20° und 40° liegt.

8. Segmentanordnung nach einem der vorigen Ansprüche,
**dadurch gekennzeichnet, daß**
in dem Spalt (12) ein Dichtstreifen (16) in einer Aussparung (18) angeordnet ist, und die Tiefe der Abschrägung (30) oder Abrundung (34) stets so klein gewählt ist, daß die Abschrägung (30) oder Abrundung (34) die Aussparung (18) nicht erreicht.

9. Segmentanordnung nach einem der vorigen Ansprüche,
**dadurch gekennzeichnet, daß**
jeweils in dem Teilbereich (70) eines Segmentes (20), der einem mit einer Abschrägung (30) oder Abrundung versehenen Teilbereich eines weiteren Segments (20') am Spalt (12) gegenüberliegt, zumindest eine Kantenkühlbohrung (62) entlang der dem Spalt (12) zugewandten Kante (26) des besagten Segments (20) eine dem besagten Segment (20) zugeordnete Kühlluftkammer (50) mit der Innenseite (28) des Spalts (12) verbindet, und bei der die Achsen der Kantenkühlbohrungen (62) mit der Oberfläche (22) des besagten Segments (20) eine Winkel β einschliessen, wobei β in einem Intervall von 30° um den durch die Abschrägung (30) oder Abrundung (34) definierten Winkel α herum liegt.

## Claims

1. Segment arrangement for platforms, along the surface of which a hot-gas stream (40) flows, having segments (20, 20') arranged next to one another and in each case separated from one another by a gap (12), the hot-gas stream (40), in at least one section (70) of the gap (12), having a velocity component perpendicular to the direction of the gap from a first segment (20) to a second segment (20'), and in said section (70), that edge (26') of the surface (22') of the second segment (20') which faces the gap (12) being bevelled (30) or rounded off (34), **characterized in that**, in a second section (74) of the gap (12), the hot-gas stream (40) has a velocity component perpendicular to the direction of the gap from the second segment (20') to the first segment (20), and, in said section (74), that edge (26) of the surface (22) of the first segment (20) which faces the gap (12) is bevelled (30) or rounded off (34).

2. Segment arrangement according to Claim 1, **characterized in that** a transition region (72) in which the hot-gas stream (40) flows essentially in the direction of the gap (12) is arranged between the first and second sections (70, 74), and **in that**, in said transition region (72), the bevel (30) or rounded-off portion (34) of the first and second sections (70, 74) is gradually reduced to zero.

3. Segment arrangement according to Claim 1 or 2, **characterized in that** the said edges (26, 26') of the segments (20, 20') are bevelled at an angle α relative to the segment surface (22'), and α is between 1° and 60°.

4. Segment arrangement according to Claim 3, **characterized in that** the said edges (26, 26') of the segments (20, 20') are bevelled at an angle α relative to the segment surface (22') and α is between 20º and 40º.

5. Segment arrangement according to Claim 3, **characterized in that** the transition between the bevelled surfaces (30) and the inside (28) of each segment (20), and/or the transition between the bevelled surfaces (30) and the non-bevelled surfaces (22) of each segment (20), is rounded off in the form of an elliptical section (32).

6. Segment arrangement according to Claim 1 or 2, **characterized in that** the said edges (26, 26') of the segments (20, 20') are rounded off in the form of a quarter ellipse (34), and the ellipse has semiaxes of length L and T respectively, the angle α = arc tan T/L being between 1° and 60°.

7. Segment arrangement according to Claim 6, **characterized in that** the said edges (26, 26') of the segments (20, 20') are rounded off in the form of a quarter ellipse (34), and the ellipse has semiaxes -of length L and T respectively, the angle α = arc tan T/L being between 20º and 40º.

8. Segment arrangement according to one of the preceding claims, **characterized in that** a sealing strip (16) is arranged in a recess (18) in the gap (12), and the depth of the bevel (30) or rounded-off portion (34) always is selected to be so small that the bevel (30) or rounded-off portion (34) does not reach the recess (18).

9. Segment arrangement according to one of the preceding claims, **characterized in that**, in each case **in that** section (70) of a segment (20) which, at the gap (12), is opposite that section of a further segment . (20') which is provided with a bevel (30) or rounded-off portion, at least one edge-cooling bore (62), along that edge (26) of the said segment (20) which faces the gap (12), connects a cooling-air chamber (50), allocated to the said segment (20), to the inside (28) of the gap (12), and in which the axes of the edge-cooling bores (62) enclose with the surface (22) of the said segment (20) an angle β, β lying at an interval of 30° around the angle α defined by the bevel (30) or rounded-off portion (34).

## Revendications

1. Arrangement de segments pour plates-formes, le long desquelles circule un courant de gaz chauds (40), avec des segments (20, 20') disposés les uns à côté des autres et chaque fois séparés l'un de l'autre par un intervalle (12), dans lequel, dans au moins une région partielle (70) de l'intervalle (12), le courant de gaz chauds (40) présente une composante de vitesse perpendiculaire à la direction de l'intervalle, d'un premier segment (20) vers un deuxième segment (20'), dans lequel, dans ladite région partielle (70), l'arête (26'), tournée vers l'intervalle (12), de la surface (22') du deuxième segment (20') est chanfreinée (30) ou arrondie (34), **caractérisé en ce que**, dans une deuxième région partielle '(74) de l'intervalle (12), le courant de gaz chauds (40) présente une composante de vitesse perpendiculaire à la direction de l'intervalle, du deuxième segment (20') vers le premier segment (20), et **en ce que**, dans ladite région partielle (74), l'arête (26), tournée vers l'intervalle (12), de la surface (22) du premier segment (20) est chanfreinée (30) ou arrondie (34).

2. Arrangement de segments selon la revendication 1, **caractérisé en ce qu'**une zone de transition (72), dans laquelle le courant de gaz chauds (40) circule sensiblement suivant la direction de l'intervalle (12), est disposée entre la première et la deuxième région partielle (70, 74), et **en ce que** le chanfrein (30) ou l'arrondi (34) de la première et de. la deuxième région partielle (70, 74) est ramené progressivement à zéro dans ladite zone de transition (72).

3. Arrangement de segments selon la revendication 1 ou 2, **caractérisé en ce que** lesdites arêtes (26, 26') des segments (20, 20') sont chanfreinées sous un angle α par rapport à la surface (22') des segments, et l'angle α est compris entre 1° et 60°.

4. Arrangement de segments selon la revendication 3, **caractérisé en ce que** lesdites arêtes (26, 26') des segments (20, 20') sont chanfreinées sous un angle α par rapport à la surface (22') des segments, et l'angle α est compris entre 20° et 40°.

5. Arrangement de segments selon la revendication 3, **caractérisé en ce que** la transition entre les faces chanfreinées (30) et le côté intérieur (28) de chaque segment (20), et/ou la transition entre les faces chanfreinées (30) et les surfaces non chanfreinées (22) de chaque segment (20) est arrondie à la forme d'une portion d'ellipse (32).

6. Arrangement de segments selon la revendication 1 ou 2, **caractérisé en ce que** lesdites arêtes (26, 26') des segments (20, 20') sont arrondies en forme de quart d'ellipse (34) et **en ce que** l'ellipse présente des demi-axes de longueur L respectivement T, et dans lequel l'angle α = arctan T/L est compris entre 1° et 60°.

7. Arrangement de segments selon la revendication 6, **caractérisé en ce que** lesdites arêtes (26, 26') des segments (20, 20') sont arrondies en forme de quart d'ellipse (34) et **en ce que** l'ellipse présente des demi-axes de longueur L respectivement T, et dans lequel l'angle α = arctan T/L est compris entre 20° et 40°.

8. Arrangement de segments selon l'une quelconque des revendications précédentes, **caractérisé en ce qu'**une bande d'étanchéité (16) est disposée dans l'intervalle (12) dans un évidement (18), et **en ce que** la profondeur du chanfrein (30) ou de l'arrondi (34) est toujours choisie suffisamment faible, de telle façon que le chanfrein (30) ou l'arrondi (34) n'atteigne pas l'évidement (18).

9. Arrangement de segments selon l'une quelconque des revendications précédentes, **caractérisé en ce que**, dans la région partielle (70) d'un segment (20), qui fait face dans l'intervalle (12) à une région partielle d'un autre segment (20') pourvue d'un chanfrein (30) ou d'un arrondi (34), au moins un perçage de refroidissement d'arête (62) le long de l'arête (26) dudit segment (20) tournée vers l'intervalle (12) relie une chambre d'air de refroidissement (50) associée audit segment (20) avec le côté intérieur (28) de l'intervalle (12), et dans lequel les axes des perçages de refroidissement d'arête (62) forment un angle β avec la surface (22) dudit segment (20), et l'angle β est compris dans une plage de 30° autour de l'angle α défini par le chanfrein (30) ou l'arrondi (34).
